# EUROPÄISCHE PATENTANMELDUNG

(11) **EP 1 276 190 A1**
(43) Veröffentlichungstag der Anmeldung: **15.01.2003**
(21) Anmeldenummer: 02012231.3
(22) Anmeldetag: 04.06.2002
(51) Int. Cl.: H01T 13/38, C04B 35/111

(54) **Aluminiumoxidprodukt, insbesondere zur Verwendung als Zündkerzenisolator**

(30) Priorität: 06.07.2001 DE 10132888
(71) Anmelder: ROBERT BOSCH GMBH, 70442 Stuttgart (DE)
(72) Erfinder: Pollner, Rudolf, 96049 Bamberg (DE)

(57) **Zusammenfassung**

Es wird ein Aluminiumoxidprodukt mit einer Hauptkomponente aus 90 bis 98 Masse% Aluminiumoxid und den Zusatzkomponenten Siliziumoxid und Calciumoxid vorgeschlagen, das sich besonders als Zündkerzenisolator eignet. Das Aluminiumoxidprodukt weist dabei neben einer kristallinen Aluminiumoxidphase maximal 1 Vol.% an kristallinen Sekundärphasen auf. Weiter wird ein Aluminiumoxidprodukt vorgeschlagen, das 90 bis 98 Masse% Aluminiumoxid als Hauptkomponente und die Zusatzkomponenten Siliziumoxid und Calciumoxid enthält, und das eine elektrische Durchschlagfestigkeit bei Raumtemperatur von mindestens 62 kV/mm aufweist.

## Beschreibung

Die Erfindung betrifft ein Aluminiumoxidprodukt, insbesondere zur Verwendung als Zündkerzenisolator, nach der Gattung der unabhängigen Ansprüche.

### Stand der Technik

Aus dem deutschen Gebrauchsmuster G 92 19 177.9 ist ein Aluminiumoxidprodukt bekannt, das zur Verwendung als Zündkerzenisolator geeignet ist. Dieses Aluminiumoxidprodukt enthält neben 90 bis 98 Masse% Aluminiumoxid die Zusatzkomponenten Siliziumoxid, Calciumoxid und Magnesiumoxid, wobei die einzelnen molaren Anteile dieser Zusatzkomponenten innerhalb einer definierten Fläche des SiO₂-CaO-MgO-Phasendiagrammes liegen.

Aufgabe der vorliegenden Erfindung war die Bereitstellung eines Aluminiumoxidproduktes bzw. einer Aluminiumoxidkeramik, die eine möglichst hohe elektrische Durchschlagsfestigkeit bei Raumtemperatur aufweist.

### Vorteile der Erfindung

Das erfindungsgemäße Aluminiumoxidprodukt hat gegenüber dem Stand der Technik den Vorteil, dass es eine deutlich erhöhte elektrische Durchschlagsfestigkeit bei Raumtemperatur von mindestens 62000 V/mm aufweist, so dass es sich besonders gut als Zündkerzenisolator eignet. Weiter hat es den Vorteil, dass es sich über etablierte Herstellungstechniken, wie sie beispielsweise aus G 92 19 177.9 bekannt sind, herstellen lässt.

Vorteilhafte Weiterbildungen der Erfindung ergeben sich aus den in den Unteransprüchen genannten Maßnahmen.

So ist besonders vorteilhaft, wenn das Aluminiumoxidprodukt möglichst keine kristallinen Sekundärphasen enthält und/oder wenn es maximal 1 Vol.% eines Magnesium-Spinells, vorzugsweise keinen Magnesium-Spinell, als kristalline Sekundärphase enthält.

Insbesondere hat es sich als vorteilhaft hinsichtlich der angestrebten Vermeidung der Bildung eines Magnesium-Spinells herausgestellt, wenn der Anteil an Magnesiumoxid in dem Aluminiumoxidprodukt bezogen auf die Gesamtmenge der in diesem enthaltenen Erdalkalioxide maximal 15 mol % beträgt.

Schließlich ist es hinsichtlich einer möglichst hohen Durchschlagsfestigkeit vorteilhaft, wenn der Anteil an Siliziumoxid in dem Aluminiumoxidprodukt bezogen auf die Gesamtmenge der Zusatzstoffe, insbesondere der Zusatzstoffe Siliziumoxid bzw. Siliziumdioxid, Calciumoxid und Magnesiumoxid, zwischen 52,5 mol % und 60 mol % liegt.

### Ausführungsbeispiele

Die Erfindung beruht auf der Beobachtung, dass eine Keramik, die als Hauptkomponente 92 Masse% bis 98 Masse% Aluminiumoxid (Al₂O₃) und als Zusatzkomponenten Siliziumoxid (SiO₂) und Calciumoxid (CaO) aufweist, dann eine überraschend hohe elektrische Durchschlagsfestigkeit bei Raumtemperatur aufweist, wenn in dem nach dem Sintern der Ausgangsmischung erhaltenen Aluminiumoxidprodukt neben einer sich bildenden kristallinen Aluminiumoxidphase wie Korund oder α-Al₂O₃ maximal 1 Vol.% einer weiteren kristallinen Sekundärphase enthalten ist. Insbesondere wurde beobachtet, dass sich die elektrische Durchschlagsfestigkeit bei Raumtemperatur deutlich steigern lässt, wenn möglichst keine kristallinen Sekundärphasen in dem Aluminiumoxidprodukt enthalten sind.

Besonders günstig hinsichtlich einer hohen elektrischen Durchschlagsfestigkeit ist zudem, wenn dem Aluminiumoxidprodukt als weitere Zusatzkomponente Magnesiumoxid (MgO) zugesetzt ist, wobei gleichzeitig sicherzustellen ist, dass das Aluminiumoxidprodukt nach dem Sintern maximal 1 Vol.% eines Magnesium-Spinells, vorzugsweise keinen Magnesium-Spinell, enthält. Dies kann insbesondere dadurch erreicht werden, dass der Anteil an Magnesiumoxid in dem Aluminiumoxidprodukt bezogen auf die Gesamtmenge der in diesem enthaltenen Erdalkalioxide maximal 15 mol.% beträgt, und dass der Anteil an Siliziumoxid in dem Aluminiumoxidprodukt bezogen auf die Gesamtmenge der Zusatzstoffe, d.h. der Zusatzstoffe SiO₂, CaO und MgO, zwischen 52,5 mol% und 60 mol% liegt.

Zur Herstellung des erfindungsgemäßen gesinterten Aluminiumoxidproduktes wird zunächst die Hauptkomponente Aluminiumoxid (Al₂O₃) mit einem Anteil von 92 bis 98 Masse% vorgegeben und dieser eine Oxidmischung aus den Zusatzkomponenten sowie gegebenenfalls weiteren Hilfsstoffen, auch Flussmittel genannt, zugesetzt. Die Zusatzstoffe sind dabei Siliziumoxid (SiO₂), Calciumoxid (CaO) und gegebenenfalls Magnesiumoxid (MgO), wobei ihre Menge so gewählt ist, dass sie in dem nach einem Sintern erhaltenen Aluminiumoxidprodukt einen Anteil von 2 Masse% bis 8 Masse% einnehmen.

Zur Herstellung des gesinterten Aluminiumoxidproduktes wird bevorzugt gemäß der Lehre von G 92 19 177.9 vorgegangen. Insbesondere wird zunächst eine Sintertonerde mit einer mittleren Korngröße zwischen 1 µm und 5 µm und einem Natriumoxid-Gehalt (Na₂O) von kleiner 0,2 mol% eingesetzt. Diese wird dann zusammen mit entsprechenden Mengen an Kaolin, Kreide, Magnesit und gegebenenfalls Talkum, die beim Erhitzen die Oxide SiO₂, CaO und MgO bilden, in einem solchen Mengenverhältnis vermischt, dass sich nach Abschluss des nachfolgenden Sinterprozesses ein Aluminiumoxidprodukt mit einem Aluminiumoxidgehalt von 92 bis 98 Masse% ergibt.

Die so vorbereitete Mischung wird dann zunächst in einer Trommelmühle nass oder trocken gemahlen, und anschließend unter Verwendung von organischen Bindern wie PVA, Methylcellulose oder Wachsemulsion zu einem Sprühgranulat verarbeitet. Danach wird dieses Sprühgranulat durch isostatisches Pressen zu einem Grünpressling geformt, durch Schleifen mit Profilscheiben in eine endgültige Form gebracht, und bei Temperaturen zwischen 1580 °C und 1650 °C, vorzugsweise 1600 °C bis 1620 °C, gesintert.

Um sicherzustellen, dass sich bei der Herstellung des Aluminiumoxidproduktes neben der kristallinen Aluminiumoxidphase maximal 1 Vol.% einer kristallinen Sekundärphase bildet, und dass es insbesondere maximal 1 Vol.% eines Magnesium-Spinells enthält, haben sich Keramiken mit der in der nachfolgenden Tabelle wiedergegebenen Zusammensetzung als besonders geeignet erwiesen. Diesen Aluminiumoxidprodukten ist gemein, dass sie jeweils 95 Masse% Al₂O₃ enthalten und bei einer Sintertemperatur von 1610°C gesintert worden sind.

| SiO₂ [mol%] | CaO [mol%] | MgO [mol %] | Magnesium-Spinell [Vol.%] | Durchschlagsfeldstärke [kV/mm] |
|---|---|---|---|---|
| 58,3 | 39,6 | 2,1 | 0 | 67,0 |
| 58,3 | 41,7 | 0 | 0 | 66,0 |
| 56,5 | 39,1 | 4,4 | 0 | 63,0 |
| 60,0 | 36,0 | 4,0 | 0 | 68,0 |

Daneben wurden Aluminiumoxidprodukte zum Vergleich hergestellt, die Magnesium-Spinell als kristalline Sekundärphase mit einem Anteil von mehr als 1 Vol.% enthielten. Auch diese Aluminiumoxidprodukte wiesen jeweils 95 Masse% Aluminiumoxid auf und wurden bei 1610°C gesintert.

Ein erstes, im Rahmen dieser Vergleichsversuche hergestelltes Aluminiumoxidprodukt enthielt neben der genannten Menge an Aluminiumoxid als Zusatzkomponenten Siliziumoxid, Calciumoxid und Magnesiumoxid in den Anteilen 50 mol% SiO₂, 37,5 mol% CaO und 12,5 mol% MgO. Dabei wurde die Bildung einer kristallinen Sekundärphase, nämlich eines kristallinen Magnesium-Spinells, im Anteil von 2 Vol.% bis 3 Vol.% beobachtet. Die daran gemessene elektrische Durchschlagsfeldstärke bei Raumtemperatur lag bei 49 kV/mm.

In einem weiteren Vergleichsversuch wurde ein Aluminiumoxidprodukt mit 95 Masse% Al₂O₃ bei einer Sintertemperatur von 1610°C hergestellt. Dieses enthielt die Zusatzkomponenten Siliziumoxid (SiO₂), CaO und MgO in den Anteilen 44,4 mol% SiO₂, 36,1 mol% CaO und 19,4 mol% MgO. In diesem Fall wurde beobachtete, dass sich in dem erhaltenen Aluminiumoxidprodukt 4 Vol.% eines kristallinen Magnesium-Spinells als kristalline Sekundärphase ausgebildet hat. Die elektrische Durchschlagsfeldstärke bei Raumtemperatur betrug 47 kV/mm.

## Patentansprüche

1. Aluminiumoxidprodukt, insbesondere zur Verwendung als Zündkerzenisolator, mit einer Hauptkomponente aus 92 bis 98 Masse% Aluminiumoxid und den Zusatzkomponenten Siliziumoxid und Calciumoxid, **dadurch gekennzeichnet, dass** das Aluminiumoxidprodukt neben einer kristallinen Aluminiumoxidphase maximal 1 Vol.% an kristallinen Sekundärphasen enthält.

2. Aluminiumoxidprodukt nach Anspruch 1, **dadurch gekennzeichnet, dass** es keine kristallinen Sekundärphasen enthält.

3. Aluminiumoxidprodukt nach Anspruch 1, **dadurch gekennzeichnet, dass** die kristalline Aluminiumoxidphase Korund ist.

4. Aluminiumoxidprodukt nach Anspruch 1, **dadurch gekennzeichnet, dass** es als weitere Zusatzkomponente Magnesiumoxid enthält.

5. Aluminiumoxidprodukt nach Anspruch 4, **dadurch gekennzeichnet, dass** es maximal 1 Vol.% eines Magnesium-Spinells, insbesondere keinen Magnesium-Spinell, enthält.

6. Aluminiumoxidprodukt nach Anspruch 4, **dadurch gekennzeichnet, dass** der Anteil an Magnesiumoxid in dem Aluminiumoxidprodukt bezogen auf die Gesamtmenge der in diesem enthaltenen Erdalkalioxiden maximal 15 mol% beträgt.

7. Aluminiumoxidprodukt nach Anspruch 1 oder 4, **dadurch gekennzeichnet, dass** der Anteil an Siliziumoxid in dem Aluminiumoxidprodukt bezogen auf die Gesamtmenge der Zusatzstoffe, insbesondere der Zusatzstoffe SiO₂, CaO und MgO, zwischen 52,5 mol% und 60 mol% liegt.

8. Aluminiumoxidprodukt, insbesondere zur Verwendung als Zündkerzenisolator, mit einer Hauptkomponente aus 92 bis 98 Masse% Aluminiumoxid und den Zusatzkomponenten Siliziumoxid und Calciumoxid, **dadurch gekennzeichnet, dass** es eine elektrische Durchschlagfestigkeit bei Raumtemperatur von mindestens 62 kV/mm aufweist.

9. Aluminiumoxidprodukt nach Anspruch 8, **dadurch gekennzeichnet, dass** es eine Zusammensetzung nach einem der Ansprüche 1 bis 7 aufweist.
